## Europäisches Patentamt
## European Patent Office
## Office européen des brevets

(11) Numéro de publication: **0 250 328**
**A1**

## DEMANDE DE BREVET EUROPEEN

(21) Numéro de dépôt: **87401378.2**

(22) Date de dépôt: **18.06.87**

(51) Int. Cl.⁴: **H 02 K 41/025**

(30) Priorité: **20.06.86 FR 8608960**

(43) Date de publication de la demande:
**23.12.87 Bulletin 87/52**

(84) Etats contractants désignés: **BE DE GB NL**

(71) Demandeur: **CELDUC**
**Rue Ampère**
**F-42290 Sorbiers (FR)**

**INSTITUT NATIONAL DE RECHERCHE SUR LES TRANSPORTS ET LEUR SECURITE**
**2 Avenue du Général Malleret-Joinville**
**F-94114 Arcueil (FR)**

(72) Inventeur: **Maupu, Jean-Louis**
**152 rue de Chevilly**
**F-94800 Villejuif (FR)**

(74) Mandataire: **CABINET BONNET-THIRION**
**95 Boulevard Beaumarchais**
**F-75003 Paris (FR)**

(54) **Moteur linéaire pour véhicules, en particulier ferroviaires, avec un induit en gouttière étendue suivant le trajet du véhicule.**

(57) Le moteur linéaire, ici en coupe transversale, se compose d'un induit (1) étendu suivant le trajet du véhicule, et d'un inducteur (2) suspendu au véhicule par une quille (3). L'induit est une gouttière en métal ferromagnétique avec deux flasques verticaux (10) et (11), doublée intérieurement d'une peau conductrice (17). L'inducteur (2) se compose de deux circuits magnétiques (21,22) formés de tôles empilées à plat avec des encoches où passent les bobinages inducteurs (25). Entre les circuits magnétiques (21,22) est interposée une âme (20) en métal bon conducteur, percée de canaux longitudinaux (40-47) pour un refroidissement par liquide. Cette âme assure un découplage magnétique des circuits magnétiques (21,22), un refroidissement uniforme du moteur, et en outre permet le montage des deux circuits magnétiques (21, 22) avec encoches découpées, dans les bobinages terminés.

FIG.1

EP 0 250 328 A1

## Description

Moteur linéaire pour véhicules, en particulier ferroviaires, avec un induit en gouttière étendue suivant le trajet du véhicule

L'invention se rapporte à un moteur électrique linéaire pour véhicules, notamment ferroviaires, comportant un induit étendu longitudinalement suivant le trajet du véhicule et constitué d'une gouttière avec, réunis par un fond, deux flasques parallèles en matériau ferromagnétique doublée d'une peau intérieure conductrice, et un inducteur porté par le véhicule, disposé à l'intérieur de la gouttière et comprenant une armature feuilletée ferromagnétique et définissant conjointement avec les flasques de l'induit deux entrefers laminaires d'épaisseur sensiblement égale et, logés dans des encoches de l'armature, des bobinages inducteur polyphasés.

Sous les aspects de la théorie, la transposition du moteur rotatif au moteur linéaire ne pose pas de problèmes particuliers importants, mais par contre cette transposition pose, sous l'aspect pratique de nombreux problèmes technologiques, relatifs principalement au maintien des entrefers inducteurs/induit, à l'exécution des bobinages, et au refroidissement du moteur ; il va sans dire que les solutions de ces différents problèmes ne sont pas indépendants, et ne peuvent se définir séparément.

Au sujet des entrefers, on remarquera que l'entrefer des moteurs rotatifs asynchrones n'est limité dans le sens de la réduction, que par la précision du centrage réciproque des axes de rotor et de stator, qui est sensiblement celle des paliers, et les flexions éventuelles des arbres en rotation. Par contraste, dans un moteur linéaire de véhicule, les entrefers doivent être déterminés pour inclure les écarts entre la trajectoire théorique du véhicule définie par l'induit, et la trajectoire réelle. Les mouvements de lacets du véhicule sur sa voie se traduisent par des écarts horizontaux, tandis que les flexions des trains de roulement induisent des écarts verticaux. On notera que, même si l'inducteur n'est pas fixé sur une partie suspendue du véhicule, comme sa caisse, mais à une partie liée aux essieux, l'usure ou les flexions des trains de roulement et de la voie induisent des écarts verticaux relativement importants.

L'augmentation des entrefers, rendue nécessaire par les imprécisions de guidage, entraîne une augmentation de la puissance réactive absorbée par le moteur, et une augmentation des pertes actives liées à la puissance réactive.

De plus les inégalités d'entrefers entraînent des asymétries d'induction dans l'armature, et la création d'efforts d'attraction, qui ont tendance à accentuer les inégalités d'entrefer.

Par ailleurs, dans un induit en gouttière, on a au moins deux entrefers laminaires correspondant aux deux flasques parallèles, et éventuellement un troisième entrefer laminaire avec le fond. La création de l'induction magnétique dans l'armature et les entrefers intéresse au moins deux faces parallèles opposées de l'armature, où seront disposés les bobinages. La forme préférable de ces bobinages sera un spiralage autour de l'armature, analogue au bobinage de l'anneau de Gramme. En effet, si le bobinage torique de Gramme a été abandonné pour les moteurs linéaires à un seul induit plan, c'est parce que l'entrefer où était créée l'induction magnétique n'intéressait qu'une face externe de l'armature. Avec un moteur linéaire dans un induit en gouttière, il y a moins de parties de bobinage inutilisées, et l'on peut exécuter le bobinage sur un mandrin de forme, puis l'enfiler longitudinalement sur l'armature.

Toutefois ce mode de bobinage et de montage présente l'inconvénient que l'armature doit être lisse pour permettre l'enfilage longitudinal du bobinage. Ou bien on accepte que les entrefers soient augmentés de l'épaisseur des bobinages, comme il est décrit dans le document FR-A-2 330 189, ou bien on sépare les bobinages par des paquets de tôles rapportées, pour reconstituer des cloisons entre encoches, comme il est décrit dans le document DE-A-2 264 293. Cette dernière solution comporte un entrefer supplémentaire entre armature et cloison, qui vient s'ajouter à l'entrefer entre inducteur et induit.

Le problème de refroidissement du moteur linéaire découle de ce que l'inducteur se trouve confiné latéralement par la gouttière d'induit, et présente une longueur grande devant sa largeur ; un soufflage d'air transversal est gêné par l'induit, et un soufflage d'air longitudinal provoque des inégalités marquées de température entre amont et aval.

Selon le document DE-A-2 647 654 qui tire sa priorité de la demande de brevet FR-A-2 330 189, le refroidissement est obtenu en ménageant des canaux longitudinaux dans les bobinages, et en séparant les bobinages par des cales creuses prismatiques qui forment alternativement bouches d'entrée pour de l'air soufflé depuis le véhicule, et bouches de sortie pour l'air chaud vers les entrefers.

L'invention a pour objectif un moteur linéaire du genre à induit en gouttière, qui comporte des solutions améliorées aux problèmes d'entrefer, de bobinage et de refroidissement évoqués ci-dessus.

A cet effet l'invention propose un moteur électrique linéaire pour véhicules, notamment ferroviaires, comportant un induit étendu longitudinalement, suivant le trajet du véhicule, et constitué d'une gouttière comprenant, réunis par un fond, deux flasques parallèles en matériau ferromagnétique doublé d'une peau intérieure conductrice, et un inducteur porté par le véhicule, disposé à l'intérieur de la gouttière d'induit et comprenant une armature feuilletée ferromagnétique et définissant conjointement avec les flasques de l'induit deux entrefers laminaires d'épaisseurs sensiblement égales, et, logé dans des encoches de l'armature, des bobinages inducteurs polyphasés, caractérisé en ce que ladite armature est composée de deux circuits magnétiques symétriques par rapport à un plan médian de l'inducteur parallèle aux flasques d'induit, et accolés de part et d'autre d'une âme en métal bon conducteur amagnétique, l'âme étant percée de canaux pour la circulation d'un fluide de refroidissement.

En divisant l'armature en deux circuits magnétiques séparés par une âme conductrice, on réduit les interactions entre ces deux circuits magnétiques, et en corrollaire les efforts latéraux résultant d'une dissymétrie des entrefers. L'âme en métal bon conducteur électrique est également bon conducteur thermique, et le refroidissement par un fluide circulant dans les canaux assure un refroidissement efficace de l'ensemble de l'âme, qui draine la chaleur créée tant dans le fer d'armature que dans le cuivre des bobinages, en assurant des températures longitudinalement uniformes. Enfin la mise en place de l'armature dans les bobinages s'exécute en trois temps, l'enfilage d'un premier circuit magnétique et sa mise en place latérale, la même opération pour le second circuit magnétique, et enfin l'enfilage de l'âme entre les deux circuits magnétiques en position définitive.

De préférence l'âme présente une section généralement rectangulaire, avec une largeur dans une direction perpendiculaire aux flasques au moins égale à la profondeur des encoches d'armature. Cette disposition permet, après l'enfilage du premier circuit magnétique, et sa poussée latérale pour que les bobinages soient en fond d'encoches, de laisser la place pour enfiler le second circuit magnétique sans accrocher les bobinages, puis de le pousser latéralement jusqu'à ce que les bobinages soient en fond d'encoches afin d'introduire l'âme dans l'espace entre les circuits. En outre chaque circuit magnétique peut être constitué de bandes de tôles étendues longitudinalement, les encoches étant découpées dans ces bandes.

En disposition préférée les flasques de gouttière présentent des extrémités, distantes du fond, repliées l'une vers l'autre pour définir entre elles une fente, et l'inducteur est relié au véhicule par une quille longitudinale généralement parallèle aux flasques d'induit, qui passe librement entre les extrémités repliées des flasques. Cette disposition, qui améliore quelque peu le couplage magnétique inducteur induit, réduit fortement les risques qu'un corps étranger volumineux ne pénètre dans la gouttière et vienne en collision avec l'inducteur.

En association avec cette disposition de sécurité, le fond peut être ajouré pour faciliter l'évacuation des corps étrangers qui auraient pénétré dans la gouttière. Cet ajourage peut être obtenu en constituant le fond de gouttière d'induit par des traverses espacées.

D'autres caractéristiques et avantages de l'invention ressortiront d'ailleurs de la description qui va suivre à titre d'exemple, en référence aux dessins annexés dans lesquels :

la figure 1 représente, en coupe transversale, un moteur linéaire selon l'invention ;

la figure 2 est une coupe suivant le plan II-II de la figure 1 ;

la figure 3 est une vue perspective d'une âme d'armature de moteur selon l'invention ;

la figure 4 est une vue perspective partielle d'une griffe de quille de liaison du moteur au véhicule ;

les figures 5A à 5C représentent les étapes de montage d'une armature de moteur ;

la figure 6 est une coupe transversale d'une voie ferrée équipée d'une variante de moteur selon l'invention ;

la figure 7 représente une coupe d'une variante d'inducteur ;

la figure 8 représente, en vue perspective, une âme d'inducteur selon la figure 7.

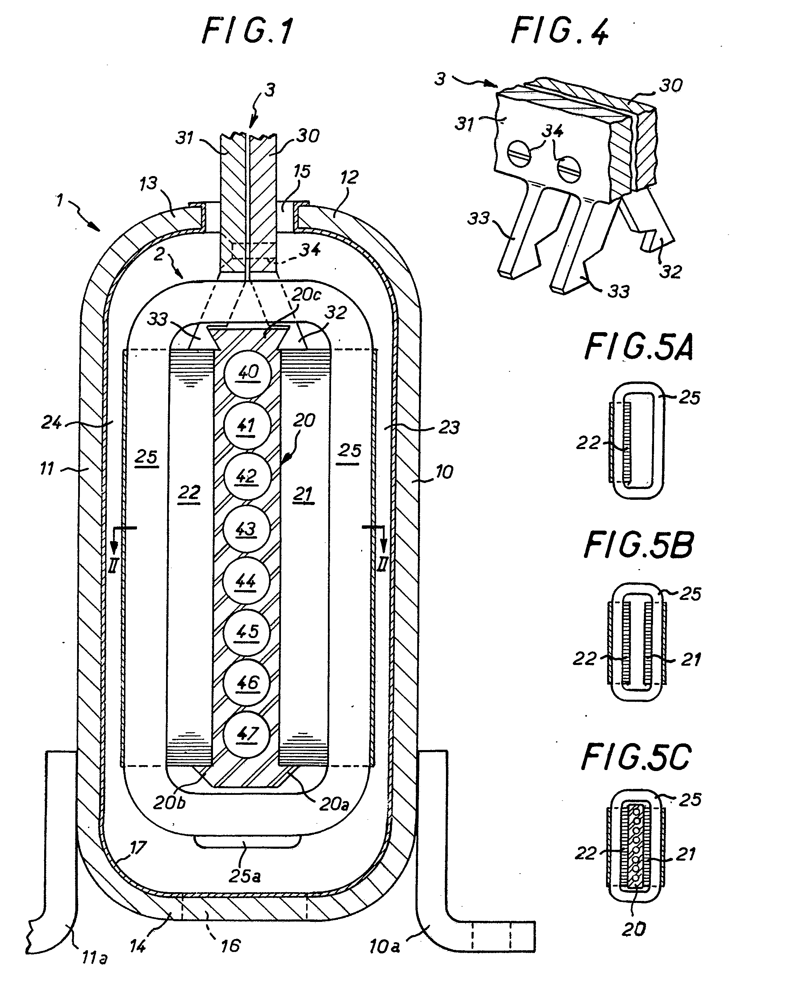

Selon le mode de réalisation choisi et représenté figures 1 et 2, le moteur se compose d'un induit 1 dans son ensemble, rendu solidaire par l'intermédiaire de pattes 10a, 11a d'une voie (non représentée) sur laquelle peut se déplacer un véhicule ferroviaire (non représenté également), et d'un inducteur 2 dans son ensemble, porté par le véhicule.

L'induit 1 comprend une gouttière en métal ferromagnétique comportant deux flasques parallèles 10 et 11, ici verticaux, réunis par un fond 14. Les extrémités supérieures 12 et 13 des flasques 10 et 11 se replient l'une vers l'autre pour définir entre elles une fente 15 par où passe librement une lame ou quille 3 qui relie l'induit 2 au véhicule.

Le fond 14 de la gouttière d'induit 1 est percé de trous 16 dont le diamètre est supérieur à la largeur de la fente 15, afin de permettre l'évacuation d'objets qui auraient accidentellement pénétré dans la gouttière par la fente 15.

Toute la paroi intérieure de la gouttière d'induit 1 est doublée d'une peau 17 en métal bon conducteur, qui possède la même fonction que les barreaux de cage d'écureuil des moteurs asynchrones tournants, tandis que le métal ferromagnétique joue le rôle d'armature d'induit.

L'inducteur 2 est placé à l'intérieur de la gouttière. Il se compose de deux circuits magnétiques 21 et 22, formés d'empilement de bandes longitudinales de tôle magnétique, étendues perpendiculairement aux flasques 10 et 11, et dans le bord extérieur desquelles sont découpées des encoches, séparées par des dents 21a, 22a, pour le logement des bobinages 25.

Entre les circuits magnétiques 21 et 22 est disposée une âme 20, à section généralement rectangulaire, dont le plan médian longitudinal parallèle aux flasques 10 et 11 constitue plan de symétrie pour les circuits magnétiques 21 et 22. Cete âme 20 est percée de canaux longitudinaux 40-47 pour le passage d'un fluide de refroidissement, comme il sera expliqué plus en détail en référence à la figure 3.

A sa partie inférieure l'âme 20 comporte deux rebords latéraux 20a et 20b, sur lesquels reposent les circuits magnétiques 21 et 22. Par ailleurs l'âme comporte à sa partie supérieure une saillie en queue d'aronde 20c, qui est pincée par des griffes complémentaires, formées par les extrémités 32 et 33 de plaques ou joues 30 et 31 qui forment la quille 3 de liaison au véhicule, et sont serrées l'une vers l'autre par des vis 34. Comme on a ménagé du jeu entre la partie supérieure de la saillie en queue d'aronde 20c et les entailles complémentaires dans les extrémités 32 et 33 de la quille 3, le serrage des plaques ou joues 30 et 31 l'une sur l'autre provoque un serrage perpendiculairement aux plans de tôles des circuits magnétiques 21 et 22 contre les rebords 20a et 20b.

On notera que les circuits magnétiques 21 et 22 forment des blocs collés, et que, après montage de l'âme, ces blocs sont contrecollés sur les faces de l'âme pour éviter tous jeux et vibrations.

Les bobinages 25 sont exécutés de façon analogue aux bobinages des anneaux de Gramme, passant dans les encoches des circuits magnétiques 21 et 22 en entourant l'ensemble de l'armature, dans une disposition classique en matière de moteurs linéaires. Les différents bobinages sont connectés aux phases de l'alimentation polyphasée de manière à former dans les entrefers un champ magnétique glissant suivant la direction longitudinale de l'induit. On ne s'étendra pas sur le couplage des bobinages pour obtenir le champ glissant voulu. On notera toutefois que les connexions de bobinages, analogues au "chignon" d'un moteur tournant, sont exécutées à la partie inférieure 25a des bobinages au-dessus du fond 14 de l'induit.

En se reportant à la figure 3, on voit que l'âme 20 dans son ensemble est constituée par un profilé en alliage léger, de section rectangulaire, avec, à son extrémité inférieure, les rebords 20a et 20b pour supporter les circuits magnétiques, et, à son extrémité supérieure, la saillie en queue d'aronde 20c pour la fixation de la quille.

L'âme se prolonge, à son extrémité postérieure, par un bloc parallélépipédique 49, pour les liaisons de l'inducteur aux circuits de refroidissement et à l'alimentation électrique.

A sa partie antérieure, l'âme 20 et percée d'un canal vertical 50, qui recoupe les canaux longitudinaux 40-47. A la partie postérieure, dans le bloc 49, une tubulure 51 prolonge un canal vertical qui recoupe les canaux 40-43, et une tubulure 52 qui passe au-delà de l'extrémité de ces canaux 43 pour recouper les canaux 44-47. On obtient ainsi un circuit de refroidissement composé de deux faisceaux, de quatre canaux, montés en série entre les canalisations 51 et 52.

Au-delà de la canalisation 52, un tube 53 vertical est prévu pour le passage des conducteurs d'alimentation de l'inducteur.

Pour fixer les idées, l'âme peut avoir une longueur de 1,50 m, une hauteur de 0,2 m et une épaisseur de 0,03 m.

On notera que l'âme peut être obtenue par filage ; dans ce cas le bloc 49 sera rapporté par soudage ou par collage. Par ailleurs les canaux 40-47 et 50 seront formés débouchants, puis obturés par insertion de bouchons, de façon classique en soi, non représentée.

La figure 4 représente en perspective la partie inférieure de la quille 3, ainsi nommée en raison de sa ressemblance avec une quille de voilier. Les deux plaques ou joues 30 et 31 se prolongent par des doigts 32, 33 qui se terminent en griffes complémentaires de la saillie en queue d'aronde 20c de l'âme d'induit. Ces doigts 32 et 33 sont espacés respectivement de la largeur des encoches pour les bobinages 25, et présentent une épaisseur correspondant à celle des dents 21a, 22a entre encoches dans les circuits magnétiques 21, 22. Ainsi les doigts 32 et 33 viennent saisir la saillie en queue d'aronde 20c dans les intervalles entre bobinages 25.

Pour le montage de l'inducteur 2 (figures 5A-5C), on prépare les bobinages 25 sur des mandrins appropriés démontables ; puis on introduit dans l'orifice central un circuit magnétique 22, constitué de tôles empilées collées, et on le chasse latéralement (figure 5A) pour que les bobinages 25 pénètrent dans les encoches. On introduit ensuite un second circuit magnétique 21 dans l'espace laissé libre entre le circuit magnétique 22 et les bobinages 25, et on le chasse latéralement (figure 5B) à l'opposé du circuit magnétique 21. On glisse alors l'âme 20 entre les circuits magnétiques 21 et 22 (figure 5C).

On remarquera que l'espace laissé libre (figure 5B) entre les circuits magnétiques 21 et 22, qui doit être au moins égal à l'épaisseur de l'âme, ne peut être inférieur à la profondeur d'encoche, sinon l'enfilage du circuit magnétique 21 serait impossible.

Après le montage de l'âme, la quille 3 est mise en place pour serrer les empilages des circuits magnétiques 21 et 22, et l'ensemble est imprégné d'une résine polymérisable, et celle-ci est polymérisée afin que l'inducteur devienne un bloc indéformable. Bien entendu on pourra avant l'imprégnation parfaire la protection des bobinages en les entourant d'une frette isolante.

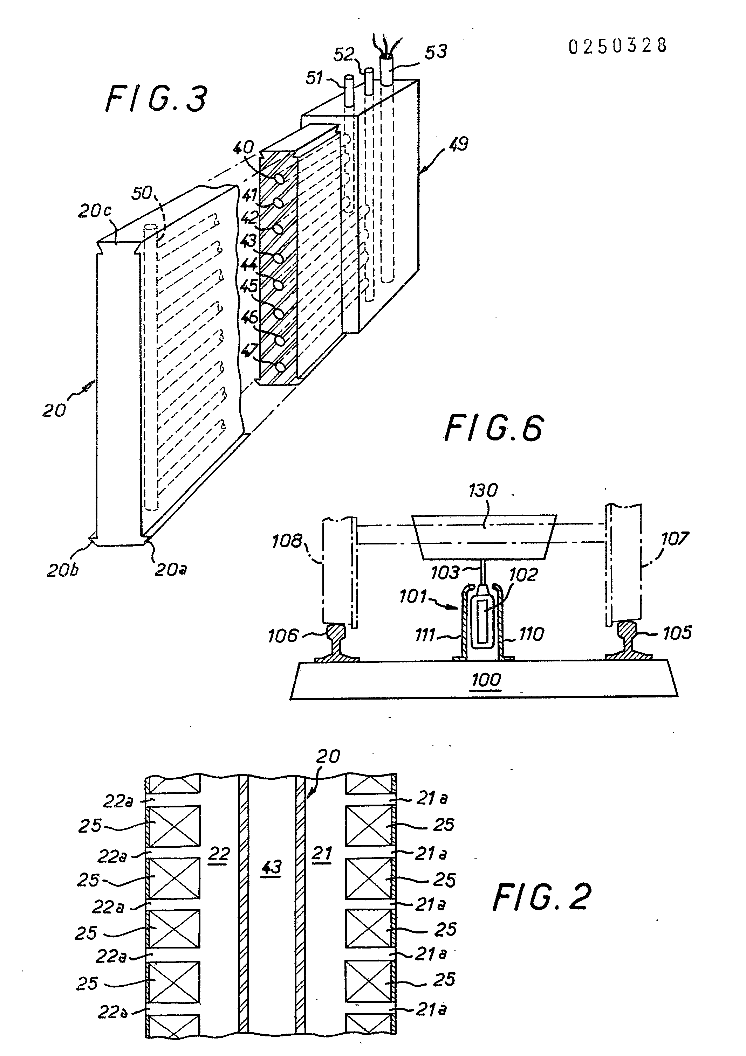

On a représenté à la figure 6, un moteur linéaire dont l'induit 101 présente une structure un peu différente. En effet cet induit est constitué de deux flasques séparés 110 et 111 qui sont montés directement sur les traverses 100 de la voie ferrée à deux rails 105, 106, disposées de part et d'autre de l'induit 101.

On a schématisé en tireté un essieu à deux roues 107 et 108 du véhicule. L'inducteur 102 est monté, par l'intermédiaire d'une quille 103, sous une coque 130 du véhicule. On comprendra qu'un dispositif est prévu, mais non représenté, pour maintenir l'inducteur 102 centré entre les flasques, malgré les écarts de centrage dus au roulement du véhicule sur les rails.

Toutefois on remarquera que les dispositions de circuits magnétiques à encoches découpées dans les bandes de tôle, rendues possibles par la structure du moteur de l'invention permet de réduire l'entrefer entre inducteur et induit à la seule distance de sécurité entre organes fixes et mobiles.

Par ailleurs, le refroidissement de l'âme par un liquide caloporteur, passant dans l'âme en métal bon conducteur de la chaleur permet une évacuation importante de chaleur, avec un gradient longitudinal de température extrêmement faible. En raison de la structure générale de l'inducteur les gradients de température seront essentiellement normaux au plan médian vertical de l'âme. Une conséquence est que les éléments semblables de l'induit seront sensiblement à la même température le long de cet induit. Il devient alors possible de réduire les coefficients thermiques de sécurité, puisqu'il n'y aura que des écarts faibles entre la température locale maximale d'un type d'organe, et les températures moyennes des organes de ce type.

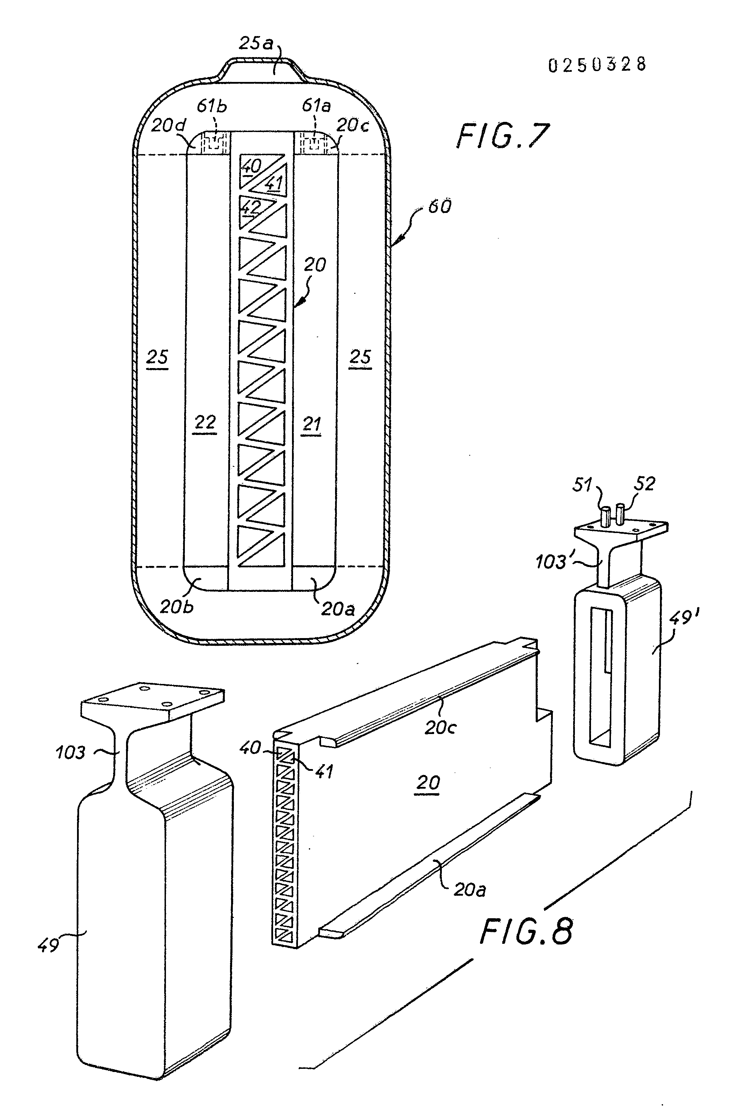

La variante représentée aux figures 7 et 8 se distingue de la disposition précédemment décrite essentiellement par la structure de l'âme 20.

Celle-ci est prise dans un bloc à profil constant, avec des canaux 40, 41, 42 à sections triangulaires. L'âme 20 comporte à sa partie supérieure des rebords 20c et 20d, semblables aux rebords inférieurs 20a et 20b décrits précédemment. Les circuits magnétiques 21 et 22 sont alors maintenus entre les rebords 20a et 20c, 20b et 20d, respectivement. Un blocage des cricuits magnétiques 21 et 22 peut être réalisé par des vis sans tête à six pans creux 61a et 61b, noyées dans les rebords 20c et 20d, respectivement. Le blocage pourrait se faire également par des vis noyées dans les rebords inférieurs.

Le montage de l'inducteur sous le véhicule n'est plus assuré par une quille qui s'étend sur toute la longueur de l'âme, mais par deux quilles courtes 103 et 103' qui font corps avec des culasses antérieure 49 et postérieure 49', qui s'emboîtent sur les deux extrémités de l'âme 20. La mise en communication générale des canaux 41, 42, 43 s'effectue par l'espace existant entre le fond de la culasse antérieure 49 et l'extrémité correspondante de l'âme 20, tandis qu'un décrochement à demi-hauteur de l'extrémité de l'âme 20 qui s'emboîte dans la culasse postérieure 49' permet la mise en communication des canaux supérieurs avec un tube 51, et des canaux inférieurs avec un tube 52, ces tubes 51 et 52 servant d'entrée et de sortie au fluide de refroidissement de l'inducteur.

Par cette disposition, l'âme 20 devient sensiblement symétrique par rapport à un plan horizontal médian. Ainsi les bobinages peuvent présenter un chignon 25a indifféremment à la partie supérieure comme représenté, ou à la partie inférieure comme à la figure 1.

Il va de soi que l'invention n'est pas limitée aux exemples décrits, mais en embrasse toutes les variantes d'exécution.

Ainsi, bien que les moteurs aient été décrits avec un plan vertical de symétrie longitudinale, avec l'inducteur 2 pendu par sa quille 3 sous le véhicule, il est clair que l'inducteur pourrait être porté verticalement sur le véhicule, ou encore disposé horizontalement ou obliquement par rapport à la verticale.

De même, bien que le mode de réalisation du véhicule décrit comporte un ensemble de roues, il va de soi que le moteur linéaire selon l'invention peut être appliqué à des véhicules à sustentation et guidage magnétiques.

## Revendications

1. Moteur électrique linéaire pour véhicules, notamment ferroviaires, comportant un induit (1) étendu longitudinalement, suivant le trajet du véhicule, et constitué d'une gouttière comprenant, réunis par un fond (14), deux flasques (10, 11) parallèles en matériau ferromagnétique doublé d'une peau intérieure (17) conductrice, et un inducteur (2) porté par le véhicule, disposé à l'intérieur de la gouttière d'induit (1) et comprenant une armature feuilletée (21, 22) ferromagnétique et définissant conjointement avec les flasques (10, 11) de l'induit deux entrefers laminaires (23, 24) d'épaisseurs sensiblement égales, et, logés dans des encoches de l'armature (21, 22), des bobinages (25) inducteurs polyphasés, caractérisé en ce que ladite armature est composée de deux circuits magnétiques (21, 22) symétriques par rapport à un plan médian de l'inducteur (2) parallèle aux flasques (10, 11) d'induit (1), et accolés de part et d'autre d'une âme (20) en métal bon conducteur amagnétique, l'âme étant percée de canaux (40-47) pour la circulation d'un fluide de refroidissement.

2. Moteur selon la revendication 1, caractérisé en ce que ladite âme (20) présente une section généralement rectangulaire, avec une largeur dans une direction perpendiculaire aux flasques (10, 11) au moins égale à la profondeur des encoches d'armature.

3. Moteur selon l'une des revendications 1 et 2, caractérisé en ce que chaque circuit magnétique (21, 22) est constitué d'un empilement de bandes de tôles étendues longitudinalement, les encoches étant découpées dans ces bandes.

4. Moteur selon la revendication 3, caractérisé en ce que lesdites bandes de tôle sont disposées perpendiculairement au plan médian de symétrie des circuits magnétiques (21, 22).

5. Moteur selon une quelconque des revendications 1 à 4, caractérisé en ce que les flasques (10, 11) de gouttière présentent des extrémités (12, 13), distantes du fond (14), repliées l'une vers l'autre pour définir entre elles une fente (15) et l'inducteur (2) est relié au véhicule par une quille (3) longitudinale généralement parallèle aux flasques d'induit (10, 11), qui passe librement entre les extrémités (12, 13) repliées des flasques.

6. Moteur selon la revendication 5, caractérisé en ce que la quille (3) est formée de deux joues (30, 31) symétriques par rapport au plan médian de symétrie des circuits magnétiques (21, 22), et définissant conjointement à leurs parties inférieures au moins une griffe encochée (32, 33) complémentaire d'une saillie (20c) en queue d'aronde de ladite âme (20), et des têtes de bobine (25).

7. Moteur selon la revendication 6, caractérisé en ce que l'âme comporte, à sa partie opposée à ladite saillie (20c) en queue d'aronde, une paire de rebords latéraux (20a, 20b) contre lesquels butent les circuits magnétiques (21, 22), ainsi serrés entre la quille (3) et la paire de rebords (20a, 20b).

8. Moteur selon la revendication 5, caractérisé en ce que la quille est composée de deux tronçons (103, 103') solidaires de deux culasses (49, 49') où s'emboîtent les extrémités longitudinales de l'âme (20).

9. Moteur selon la revendication 8, caractérisé en ce que l'âme (20) présente des rebords inférieurs (20a, 20b) et supérieurs (20c, 20d), les circuits magnétiques (21, 22) étant serrés entre rebords supérieurs et inférieurs.

10. Moteur selon la revendication 8 ou la revendication 9, caractérisé en ce que ladite âme constitue un faisceau de canaux (40, 41, 42...), des collecteurs ménagés dans les culasses (49, 49′) assurant la mise en communication appropriée des canaux (40, 41, 42...).

11. Moteur selon une quelconque des revendications 1 à 7, caractérisé en ce que l'inducteur (2) étant distant du fond (14) de la gouttière d'induit (1), les bobinages inducteurs (25) polyphasés présentent des connexions entre eux (25a), disposées entre ladite âme et le fond de gouttière.

12. Moteur selon une quelconque des revendications 1 à 11, caractérisé en ce que ledit fond (4) de gouttière est ajouré.

13. Moteur selon la revendication 12, caractérisé en ce que le fond de gouttière est constitué d'une série de traverses espacées (100).

**FIG.1**

**FIG.4**

**FIG.5A**

**FIG.5B**

**FIG.5C**

FIG.3

FIG.6

FIG.2

0250328

0250328

*FIG.7*

*FIG.8*

Office européen
des brevets

**RAPPORT DE RECHERCHE EUROPEENNE**

Numéro de la demande

EP   87 40 1378

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A-2 081 982  (KRAUSS-MAFFEI)<br><br>* Page 2, ligne 8 - page 3, ligne 48; figures 1,2 * | 1,2,4, 5,7-9 | H 02 K   41/025 |
| A | | 10 | |
| | --- | | |
| A | CH-A- 516 888  (JUFER)<br>* Colonne 4, lignes 32-60; fig-ures 3,4,6-9 * | 3,4 | |
| | --- | | |
| A | US-A-2 412 511  (JONES)<br><br>* Colonne 1, ligne 46 - colonne 4, ligne 18; figure 2 * | 3,4,7, 9,11-13 | |
| | | | **DOMAINES TECHNIQUES RECHERCHES (Int. Cl.4)** |
| | --- | | |
| A | US-A-2 428 570  (JONES)<br>* Colonne 4, ligne 70 - colonne 5, ligne 14; colonne 9, lignes 51-67; figures 1,5,7 * | 6 | H 02 K |
| | --- | | |
| A | DE-A-1 963 505  (LINERAIL)<br>* Page 4, lignes 8-17; figures 1-5 * | 12 | |
| | --- | | |
| D,A | FR-A-2 330 189  (GUIMBAL)<br>* Page 3, lignes 2-6; figures * | 10 | |
| | ----- | | |

Le présent rapport de recherche a été établi pour toutes les revendications

| Lieu de la recherche | Date d'achèvement de la recherche | Examinateur |
|---|---|---|
| LA HAYE | 15-09-1987 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82